# EUROPEAN PATENT APPLICATION

(11) **EP 3 964 939 A1**
(43) Date of publication of application: **09.03.2022**
(21) Application number: 19932927.7
(22) Date of filing: 14.06.2019
(51) Int. Cl.: G06F 3/06

(54) **HARD DISK CONTROL METHOD AND RELATED DEVICE**

(71) Applicant: Huawei Technologies Co., Ltd., Longgang District Shenzhen, Guangdong 518129 (CN)
(72) Inventor: ZHOU, Jianhua, Shenzhen, Guangdong 518129 (CN)
(74) Representative: MERH-IP Matias Erny Reichl Hoffmann Patentanwälte PartG mbB
(86) International application number: PCT/CN2019/091189
(87) International publication number: WO 2020/248206

(57) **Abstract**

Embodiments of the present invention provide a hard disk control method and a related device. The hard disk control method includes: detecting whether an amount of user data stored in a storage device meets a first amount condition; and when the amount of stored user data meets the first amount condition, converting a data storage mode of a first sub-area in a first storage area from a first mode to a second mode, where the first mode and the second mode are two different modes in an SLC mode, an MLC mode, a TLC mode, and a QLC mode. When data density of a storage device storing data in the second mode is higher than data density of the storage device storing the data in the first mode, the storage device may expand a capacity of storage space, to avoid capacity loss. When the data density of the storage device storing the data in the second mode is lower than the data density of the storage device storing the data in the first mode, the storage device may increase a program-erase cycle of the storage device, and prolong a service life of the storage device.

## Description

### TECHNICAL FIELD

The present invention relates to the storage field, and in particular, to a hard disk control method and a related device.

### BACKGROUND

A hard disk usually uses a NAND flash. The NAND flash is a non-volatile random access storage medium. After power is turned off, data stored in the hard disk using the NAND flash does not disappear. The hard disk using the NAND flash may be classified into a single-level cell (single level cell, SLC), a multi-level cell (multi level cell, MLC), a triple-level cell (triple level cell, TLC), a quad-level cell (quad level cell, QLC), or the like based on a different amount of data stored in each cell. Each cell in an SLC hard disk stores only 1-bit data, each cell in an MLC hard disk stores 2-bit data, each cell in a TLC hard disk stores 3-bit data, and each cell in a QLC hard disk stores 4-bit data.

Currently, a larger amount of data stored in each cell in the hard disk using the NAND flash indicates a higher data density of the hard disk. A smaller program-erase cycle indicates a shorter service life. Some hard disks each may adjust a data storage mode of the hard disk. For example, the QLC hard disk may adjust the data storage mode to an SLC mode. Therefore, this can reduce data density of the QLC hard disk, and can prolong a service life of the hard disk. However, this method causes the hard disk to lose a corresponding capacity.

For some hard disks, the hard disks each may be adjusted as a whole, or the hard disks each may first be divided into a plurality of areas, and then each area is adjusted separately. For example, the QLC hard disk can be set to the SLC mode as a whole. In this case, the QLC hard disk loses 3/4 of the capacity. Alternatively, a half of space of the TLC hard disk can be set to the SLC mode, a remaining half of the space of the TLC hard disk can be set to an MLC mode. In this way, the part that is of the TLC hard disk and that is set to the SLC mode loses 2/3 of the capacity, the part that is set to the MLC mode loses 1/3 of the capacity, and the TLC hard disk loses half of the capacity. Therefore, after the hard disk adjusts the data storage mode, the hard disk loses the capacity.

### SUMMARY

According to a first aspect of this embodiment of the present invention, a hard disk control method is provided. The method is applied to a storage device, and the method includes: detecting whether an amount of user data stored in the storage device meets a first amount condition, where the storage device includes a first storage area, the first storage area stores data in a first mode, and the first mode is one of an SLC mode, an MLC mode, a TLC mode, and a QLC mode; and when the amount of stored user data meets the first amount condition, converting a data storage mode of a first sub-area in the first storage area from the first mode to a second mode, where the second mode is one of the SLC mode, the MLC mode, the TLC mode, and the QLC mode, and the second mode is different from the first mode.

When the first amount condition is greater than or equal to a first preset value, the storage device may convert the data storage mode of the storage device from the first mode to the second mode. If the first mode is the SLC mode, the second mode may be one of the QLC mode, the TLC mode, and the MLC mode. If the first mode is the MLC mode, the second mode may be the TLC mode or the QLC mode. If the first mode is the TLC mode, the first mode may be the QLC mode. Therefore, this can improve data density of the storage device, expand a capacity of storage space of the storage device, and ensure that the capacity of the storage device is not lost. When the first amount condition is less than a second preset value, the storage device may convert the data storage mode of the storage device from the first mode to the second mode. If the first mode is the QLC mode, the second mode is one of the SLC mode, the MLC mode, and the TLC mode. If the first mode is the TLC mode, the second mode may be the SLC mode or the MLC mode. If the first mode is the MLC mode, the second mode may be the SLC mode. Therefore, this can reduce the data density of the storage device, can increase a program-erase cycle of the storage device, and can prolong a service life of the storage device.

Optionally, after the converting a data storage mode of a first sub-area in the first storage area from the first mode to a second mode, the method further includes: migrating at least a part of user data in the user data in the first storage area to a converted first sub-area; releasing an area occupied by the at least a part of user data in the first storage area; and converting a data storage mode of the area occupied by the at least a part of user data to the second mode. In this case, a data storage mode of a first sub-area in which no data is stored may be first converted from the first mode to the second mode, and then the user data in the space in which data is stored in the first mode is migrated to the converted first sub-area. In this way, the space in which data is stored in the first mode before the user data is migrated may be released, and then the data storage mode of the space in which data is stored in the first mode is converted to the second mode, so that data storage modes in all storage space of the storage device are gradually converted to the second mode. Therefore, this can prolong a service life of the storage device, and can ensure that the capacity of the storage device is not lost.

Optionally, before the converting a data storage mode of a first sub-area in the first storage area from the first mode to a second mode, the method further includes: migrating at least a part of user data in the user data in the first storage area to a cache of the storage device; releasing an area occupied by the at least a part of user data; and after the converting a data storage mode of a first sub-area in the first storage area from the first mode to a second mode, writing the at least a part of user data to a converted first storage area in the second mode. This uses the cache of the storage device, and improves utilization efficiency of the storage resource.

Optionally, the storage device further includes a second storage area, the second storage area stores data in the second mode, and before the converting a data storage mode of a first sub-area in the first storage area from the first mode to a second mode, the method further includes: migrating at least a part of user data in the user data in the first storage area to the second storage area of the storage device; and releasing an area occupied by the at least a part of user data. In this way, the user data may be first migrated, and the storage space is released. This can ensure data security.

Optionally, the method further includes: receiving a data write request, where the data write request includes target data; and writing the target data into the converted first sub-area in the second mode. After the data storage mode of the first sub-area in the first storage area is converted from the first mode to the second mode. If the storage device receives the data write request again, the storage device writes the target data into the converted first sub-area in the second mode.

Optionally, the method further includes: detecting whether the amount of user data stored in the storage device meets a second amount condition, where the storage device includes the second storage area; and when the amount of stored user data meets the second amount condition, converting a data storage mode of a second sub-area in the second storage area from the second mode to a third mode, where the third mode is one of the SLC mode, the MLC mode, the TLC mode, and the QLC mode, and the third mode is different from the second mode. After the first amount condition is met, if the amount of user data stored in the storage device continues to change until the amount of user data stored in the storage device meets the second amount condition, the storage device may convert the data storage mode of the second sub-area in the second storage area from the second mode to the third mode. Therefore, this can prolong a service life of the storage device, and can ensure that the capacity of the storage device is not lost.

According to a second aspect of this embodiment of the present invention, a hard disk control apparatus is provided. The hard disk control apparatus is applied to a hard disk, and the hard disk includes a flash memory controller and a flash memory chip. The flash memory chip includes a plurality of erase blocks. The hard disk control apparatus is located in the flash memory controller, and the hard disk control apparatus includes: a detection module, configured to detect whether an amount of user data stored in the storage device meets a first amount condition, where the storage device includes a first storage area, the first storage area stores data in a first mode, and the first mode is one of an SLC mode, an MLC mode, a triple-level cell TLC mode, and a quad-level cell QLC mode; and a processing module, configured to: when the amount of stored user data that is detected by the detection module meets the first amount condition, convert a data storage mode of a first sub-area in the first storage area from the first mode to a second mode, where the second mode is one of the SLC mode, the MLC mode, the TLC mode, and the QLC mode, and the second mode is different from the first mode. The processing module converts the data storage mode of the first sub-area in the first storage area from the first mode to the second mode. This can prolong a service life of the storage device, and can ensure that a capacity of the storage device is not lost.

Optionally, the hard disk control apparatus includes: the processing module is, configured to migrate at least a part of user data in the user data in the first storage area to the converted first sub-area; the processing module is further configured to release an area occupied by the at least a part of user data in the first storage area; and the processing module is further configured to convert a data storage mode of the area occupied by the at least a part of user data to the second mode.

Optionally, the hard disk control apparatus includes: the processing module is further configured to migrate at least a part of user data in the user data in the first storage area to a second storage area of the hard disk, where the second storage area stores data in the second mode; and the processing module is further configured to release an area occupied by the at least a part of user data.

Optionally, the hard disk control apparatus includes: a receiving module, configured to receive a data write request, where the data write request includes target data; and the processing module is further configured to write the target data into the converted first sub-area in the second mode.

Optionally, the hard disk control apparatus includes: the detection module is further configured to detect whether the amount of user data stored in the storage device meets a second amount condition, where the storage device includes the second storage area; and the processing module is further configured to: when the amount of stored user data that is detected by the detection module meets the second amount condition, convert a data storage mode of a second sub-area in the second storage area from the second mode to a third mode, where the third mode is one of the SLC mode, the MLC mode, the TLC mode, and the QLC mode, and the third mode is different from the second mode.

According to a third aspect of this embodiment of the present invention, a controller is provided. The controller is located in a storage device, the storage device includes at least one hard disk and the controller, the controller includes a processor and a memory, the memory stores a program instruction, and the processor is configured to invoke the program instruction in the memory to perform the following steps: detecting whether an amount of user data stored in the storage device meets a first amount condition, where the storage device includes a first storage area, the first storage area stores data in a first mode, and the first mode is one of a single-level cell SLC mode, a multi-level cell MLC mode, a triple-level cell TLC mode, and a quad-level cell QLC mode; and when the amount of user data stored in the storage device meets the first amount condition, converting a data storage mode of a first sub-area in the first storage area from the first mode to a second mode, where the second mode is one of the SLC mode, the MLC mode, the TLC mode, and the QLC mode, and the second mode is different from the first mode. Therefore, this can prolong a service life of the storage device, and can ensure that a capacity of the storage device is not lost.

Optionally, the processor is further configured to invoke the program instruction in the memory to perform the following steps: migrating at least a part of user data in the user data in the first storage area to a converted first sub-area; releasing an area occupied by the at least a part of user data in the first storage area; and converting a data storage mode of the area occupied by the at least a part of user data to the second mode.

Optionally, the processor is further configured to invoke the program instruction in the memory to perform the following steps: migrating at least a part of user data in the user data in the first storage area to a cache of the storage device; releasing an area occupied by the at least a part of user data; and after the converting a data storage mode of a first sub-area in the first storage area from the first mode to a second mode, writing the at least a part of user data into a converted first storage area in the second mode.

Optionally, the processor is further configured to invoke the program instruction in the memory to perform the following steps: migrating at least a part of user data in the user data in the first storage area to a second storage area of the storage device, where the second storage area stores data in the second mode; and releasing an area occupied by the at least a part of data.

Optionally, the controller is further configured to invoke the program instruction in the memory to perform the following steps: receiving a data write request, where the data write request includes target data; and writing the target data into the second storage area or the converted first storage area in the second mode.

Optionally, the processor is further configured to invoke the program instruction in the memory to perform the following steps: detecting whether the amount of user data stored in the storage device meets a second amount condition, where the storage device includes the second storage area; and when the amount of stored user data stored in the storage device meets the second amount condition, converting a data storage mode of a second sub-area in the second storage area from the second mode to a third mode, where the third mode is one of the SLC mode, the

MLC mode, the TLC mode, and the QLC mode, and the third mode is different from the second mode.

This application further provides a computer-readable storage medium. The computer-readable storage medium stores an instruction. When the instruction is run on a computer, the computer is enabled to perform the methods in the foregoing aspects.

This application further provides a computer program product including an instruction. When the computer program product runs on a computer, the computer is enabled to perform the methods in the foregoing aspects.

Embodiments of the present invention provide a hard disk control method and a related device. The hard disk control method includes: detecting whether an amount of user data stored in a storage device meets a first amount condition; and when the amount of stored user data meets the first amount condition, converting a data storage mode of a first sub-area in a first storage area from a first mode to a second mode, where the second mode is different from the first mode. When the first amount condition is greater than or equal to a first preset value, the storage device may convert the data storage mode of the storage device from the first mode to the second mode. For example, the first mode is an SLC mode, and the second mode is a QLC mode. Therefore, this can improve data density of the storage device, expand a capacity of storage space of the storage device, and ensure that the capacity of the storage device is not lost. When the first amount condition is less than a second preset value, the storage device may convert the data storage mode of the storage device from the first mode to the second mode. For example, the first mode is the QLC mode, and the second mode is the SLC mode. Therefore, this can reduce the data density of the storage device, can increase a program-erase cycle of the storage device, and can prolong a service life of the storage device.

### BRIEF DESCRIPTION OF DRAWINGS

FIG. 1 is a composition diagram of a storage device according to an embodiment of the present invention;
FIG. 2 is a schematic structural diagram of a controller according to an embodiment of the present invention;
FIG. 3 is a schematic structural diagram of a hard disk according to an embodiment of the present invention;
FIG. 4 is a schematic diagram of a hard disk mode according to an embodiment of the present invention;
FIG. 5 is a schematic diagram of an embodiment of a hard disk control method according to an embodiment of the present invention;
FIG. 6 is a schematic diagram of another embodiment of a hard disk control method according to an embodiment of the present invention;
FIG. 7 is a schematic diagram of another embodiment of a hard disk control method according to an embodiment of the present invention;
FIG. 8 is a schematic diagram of another embodiment of a hard disk control method according to an embodiment of the present invention;
FIG. 9 is a schematic diagram of another embodiment of a hard disk control method according to an embodiment of the present invention;
FIG. 10 is a schematic diagram of an embodiment of a hard disk according to an embodiment of the present invention; and
FIG. 11 is a schematic diagram of an embodiment of a controller according to an embodiment of the present invention.

### DESCRIPTION OF EMBODIMENTS

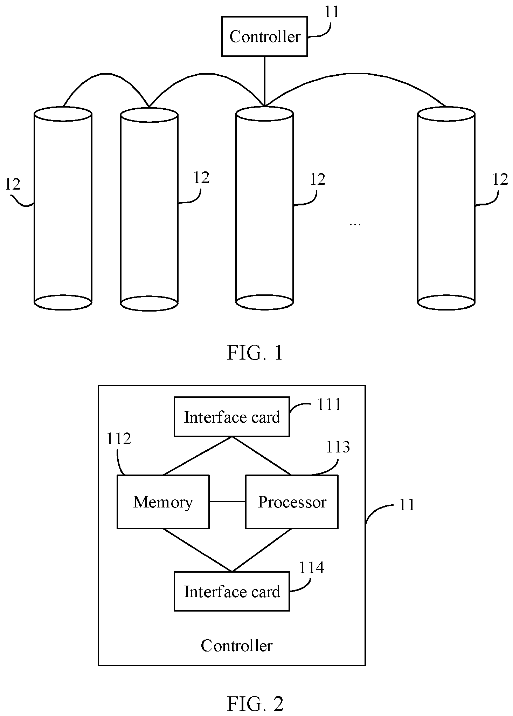

FIG. 1 shows a composition diagram of a flash memory array according to an embodiment of the present invention. The flash memory array in FIG. 1 includes at least one controller 11 and a plurality of hard disks 12. The hard disk 12 may be a solid-state drive (solid state disk, SSD). The solid-state drive is a memory using a flash memory (flash memory) chip as a medium, and is also referred to as a solid-state drive (solid state drive, SSD). The controller 11 is connected to another device through a storage area network (storage area network, SAN). The controller 11 may be a computing device, for example, a server or a desktop computer. An operating system and an application program are installed on the controller 11. The controller 11 may receive an input/output (I/O) request from a host. The controller 11 may further store data carried in the I/O request, and write the data into the hard disk 12.

FIG. 1 is merely an example for description. In actual application, a storage system may include two or more controllers. A physical structure and a function of each controller are similar to those of the controller 11. In addition, a connection manner between the controllers and a connection manner between any controller and the hard disk 12 are not limited in this embodiment, provided that the controllers can communicate with each other and each of the controllers and the hard disk 12 can communicate with each other.

FIG. 2 is a schematic structural diagram of the controller 11 in FIG. 1. As shown in FIG. 2, the controller 11 includes an interface card 111, a memory 112, and a processor 113.

The interface card 111 is configured to communicate with a host, and the controller 11 may receive an operation instruction of the host by using the interface card 111. The processor 113 may be a central processing unit (central processing unit, CPU). In this embodiment of the present invention, the processor 113 may be configured to receive and process an I/O request from the host. The I/O request may be a data write request or a data read request. The processor 113 may further send data in the data write request to the hard disk 12. In addition, the processor 113 may be further configured to perform a garbage collection operation for the system. An interface card 114 is configured to communicate with the hard disk 12, and the controller 11 may send the data write request to the hard disk 12 for storage by using the interface card 114.

The controller 11 may further include the memory 112. The memory 112 is configured to temporarily store data received from the host or the data read from the hard disk 12. When receiving a plurality of data write requests sent by the host, the controller 11 may temporarily store data that is in the plurality of data write requests in the memory 112. When a capacity of the memory 112 reaches a certain threshold, the data stored in the memory 112 and logical addresses allocated to the data are sent to the hard disk 12. The hard disk 12 stores the data. The memory 112 includes a volatile memory, a flash memory chip, or a combination thereof. The volatile memory is, for example, a random-access memory (random-access memory, RAM). The flash memory chip is any machine-readable medium that can store program code, such as a floppy disk, a hard disk, a solid-state drive, or an optical disc. The memory 112 has a power-off protection function. The power-off protection function refers that the data stored in the memory 112 is not lost when the system is powered off and then powered on again.

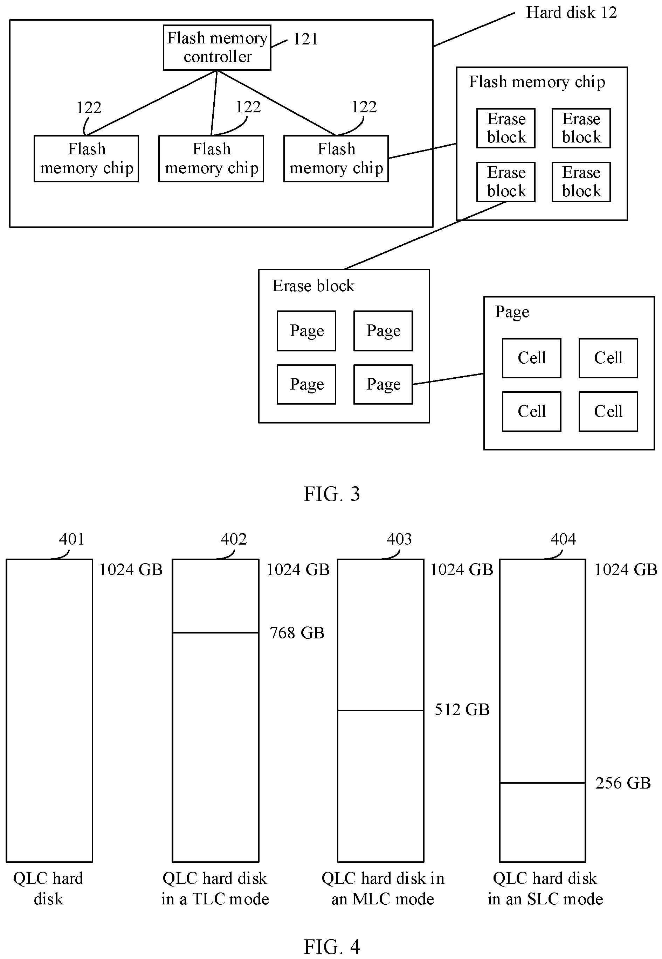

FIG. 3 is a schematic structural diagram of the hard disk 12 in FIG. 1. As shown in FIG. 3, the hard disk 12 may include a flash memory controller 121 and a plurality of flash memory chips 122. The flash memory controller 121 is configured to perform an operation, for example, performing a data write request or a data read request sent by the controller 11. It should be noted that the controller 11 in FIG. 1 belongs to a system controller, and the system controller is an independent device, which is different from the flash memory controller 121 in the hard disk 12.

The flash memory controller 121 includes a flash translation layer (flash translation layer, FTL). The flash translation layer is configured to store a correspondence between a logical address of data and an actual address. Therefore, the flash translation layer is configured to convert the logical address in the data write request or the data read request sent by the system controller to the actual address of the data in the hard disk. The logical address of the data is allocated by the system controller, and includes a start logical address and a length. The actual address of the data may be a physical address of the data in the hard disk, or may be an address that is virtualized based on the physical address and that is visible only to the flash memory controller. The actual address is invisible to the system controller.

The hard disk generally includes one or more flash memory chips. Each flash memory chip includes a plurality of erase blocks. The data is read from or written into the hard disk on a page (page), but an erase operation can be performed only on one erase block. The erase operation is used to set all bits of the block to 1. Before erasing, the flash memory controller needs to first copy valid data in the erase block to a blank page of another block. The valid data in the erase block is data that is stored in the block and that is not modified, and the data may be read. Invalid data in the erase block is data that is stored in the block and that is modified, and the data may not be read.

Each erase block includes a plurality of pages. The hard disk writes the data on a page when performing the data write request. For example, the controller 11 sends a data write request to the flash memory controller 121. The data write request includes a logical address of data. After receiving the data write request, the flash memory controller 121 continuously writes the data into one or more erase blocks in a receiving time sequence. "Continuously writes the data into one or more erase blocks" refers that: The flash memory controller 121 searches for a blank erase block, and writes the data into the blank erase block until the blank erase block is fully filled; and when an amount of data exceeds a capacity of the erase block, the flash memory controller 121 searches for a next blank erase block, and continues to write the data into the next blank erase block. The flash translation layer establishes and stores a correspondence between the logical address and an actual address of a page into which the data is written. When the controller 11 sends a data read request to the flash memory controller 121 to request to read the data, the data read request includes the logical address. The flash memory controller 121 reads the data based on the logical address and the correspondence between the logical address and the actual address, and sends the data to the controller 11.

A cell (cell) is a minimum operation unit of a page. One cell corresponds to one floating gate transistor, and may store 1-bit (bit) data or multi-bit data, which depends on a type of a hard disk. Cells on one page share a character line. The cell includes a control grid and a floating gate, and the floating gate is a unit that actually stores the data. The data is stored in the cell in a form of electrical charge (electrical charge). How many electrical charges are stored depends on a voltage applied to the control gate. The voltage controls the control gate to charge the electrical charge into the floating gate or to release the electrical charge from the floating gate. The data is represented by whether the voltage of the stored electrical charges exceeds a specific threshold. Writing the data into the floating gate is to apply a voltage to the control gate, so that enough electrical charges are stored in the floating gate. If the electrical charges exceed a threshold, the data is 0. Performing the erase operation on the floating gate is to discharge the floating gate, so that the electrical charge stored in the floating gate is lower than the threshold, and the data is 1.

A hard disk that stores 1-bit data in each cell is referred to as an SLC hard disk. A floating gate of each cell in the SLC hard disk has a voltage threshold, and therefore has two states of 0 and 1. The 1-bit data may be stored, and data density is relatively low. The SLC hard disk has advantages of a high write speed, low power consumption, and a longer battery life. Therefore, the SLC hard disk has a faster transmission speed and a longer service life. Each cell in a multi-level cell MLC hard disk has four states (00, 01, 10, and 11), and each cell can be used to store 2-bit data. Compared with the SLC hard disk, the MLC hard disk has a higher bit error rate, higher data density, a shorter service life, and lower costs. A hard disk that stores 3-bit data in each cell is referred to as a TLC hard disk, and each cell in the TLC hard disk has eight states. The disadvantages of the MLC hard disk are also obvious on the TLC hard disk, but the TLC hard disk also features higher data density and lower costs. In addition, there are a QLC hard disk for storing 4-bit data in each cell and another multi-level cell hard disk. Each cell in the QLC hard disk has 16 states, and each cell may store 4-bit data.

Some hard disks each may increase a program-erase cycle of the hard disk by lowering data density of the hard disk, so that a service life of the hard disk is prolonged. Specifically, the data density of the hard disk may be reduced by reducing an amount of data stored in each cell in the hard disk. For example, the QLC hard disk may adjust the amount of data stored in each cell from 4 bits to 3 bits. In this case, each cell in the QLC hard disk stores 3-bit data. The amount of data is the same as the amount of data stored in each cell in the TLC hard disk. It may be considered that a data storage mode of the QLC hard disk is a TLC mode.

The QLC hard disk may also adjust the amount of data stored in each cell from 4 bits to 2 bits or 1 bit. When each cell in the QLC hard disk stores 2-bit data, the amount of data is the same as the amount of data stored in each cell in the MLC hard disk. It may be considered that the data storage mode of the QLC hard disk is an MLC mode. When the amount of data stored in each cell in the QLC hard disk is 1 bit, the amount of data is the same as the amount of data stored in each cell in the SLC hard disk. It may be considered that the data storage mode of the QLC hard disk is an SLC mode. Similarly, the TLC hard disk may also adjust the data storage mode to the MLC mode or the SLC mode, and the MLC hard disk may also adjust the data storage mode to the SLC mode.

After the data density of the hard disk is reduced, the program-erase cycle is accordingly increased, but a part of storage space is lost. Using FIG. 4 as an example, a storage capacity of a QLC hard disk 401 is 1024 GB (gigabyte). If the QLC hard disk 401 adjusts a data storage mode to a TLC mode, a storage capacity of a QLC hard disk 402 in the TLC mode is 768 GB. If the QLC hard disk 401 adjusts the data storage mode to an MLC mode, a storage capacity of a QLC hard disk 403 in the MLC mode is 512 GB. If the QLC hard disk 401 adjusts the data storage mode to an SLC mode, a storage capacity of the QLC hard disk 404 in the SLC mode is 256 GB. Therefore, this adjustment method can prolong a service life of the hard disk, but may lose a certain capacity of the hard disk.

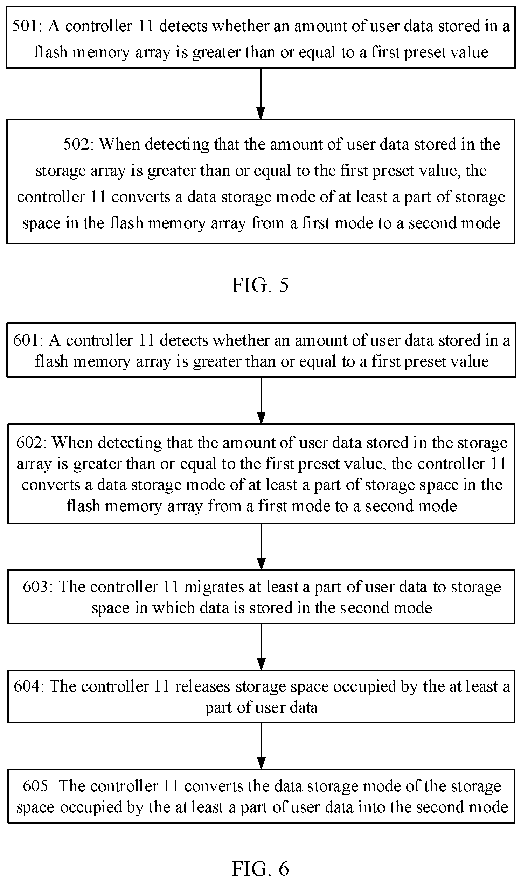

Therefore, Embodiment 1 of the present invention provides a hard disk control method. The hard disk control method can prolong a service life of a hard disk, and can ensure that a capacity of the hard disk is not lost. The method may be applied to the flash memory array shown in FIG. 1. As shown in FIG. 5, the method includes the following steps.

501: The controller 11 detects whether an amount of user data stored in a flash memory array is greater than or equal to a first preset value.

The controller 11 in the flash memory array detects whether the amount of user data stored in the flash memory array is greater than the first preset value. For example, the first preset value may be 80% of a current capacity. When the amount of user data stored in the flash memory array is greater than or equal to the first preset value, if the flash memory array continues to write data in a current data storage mode, a remaining capacity of the flash memory array is about to be used up.

For example, two hard disks are disposed in the flash memory array, and data storage modes of the two hard disks each are preset to an SLC mode. The two hard disks each may be the QLC hard disk 404 in the SLC mode in FIG. 4, and storage capacities of the two QLC hard disks in the SLC mode each are 256 GB. In this case, a storage capacity of the entire flash memory array is 512 GB. The first preset value may be 409.6 GB. If the controller 11 in the flash memory array detects that the amount of user data that is stored in the two QLC hard disks in the SLC mode in the flash memory array is greater than or equal to 409.6 GB, and if the flash memory array continues to write data in the SLC mode, the remaining capacity of the flash memory array is about to be used up.

In the flash memory array, only storage space in which data is stored in the SLC mode may be preset, or storage space in which data is stored in an MLC mode, a TLC mode, or a QLC mode may be preset.

It should be noted that the controller 11 in the flash memory array may detect an amount of user data in each hard disk by using the flash memory controller 121 of each hard disk in the flash memory array, to determine the amount of user data in the entire flash memory array, and then to determine whether the amount of user data in the flash memory array is greater than or equal to the first preset value. The controller 11 may interact with the flash memory controller 121 of each hard disk, to obtain an amount of real-time user data in each hard disk.

502: When detecting that the amount of user data stored in the storage array is greater than or equal to the first preset value, the controller 11 converts a data storage mode of at least a part of storage space in the flash memory array from a first mode to a second mode.

For ease of description, the SLC mode is used as an example of the first mode, and the MLC mode is used as an example of the second mode. A hard disk storing data in the second mode has a higher data density than a hard disk storing data in the first mode. After the data storage mode of the at least a part of storage space in the flash memory array is converted from the first mode to the second mode, the capacity of the flash memory array may be expanded, and more data may be stored. It should be noted that, after the first mode is converted to the second mode, a user cannot perceive a change in the capacity of the flash memory array.

When the controller 11 detects that the amount of user data stored in the flash memory array is greater than or equal to the first preset value, the controller 11 converts the data storage mode of the at least a part of storage space in the flash memory array from the first mode to the second mode. For example, when the amount of user data stored in the flash memory array in step 501 is greater than or equal to 409.6 GB, the controller 11 may convert the data storage mode of the 50 GB storage space in which data is stored in the SLC mode in the two QLC hard disks to the MLC mode, to obtain 100 GB storage space in which data is stored in the MLC mode. In this way, the total storage space in the flash memory array is 462 GB storage space in which data is stored in the SLC mode and the 100 GB storage space in which data is stored in the MLC mode. The storage space in the flash memory array may be expanded.

Likewise, when the amount of written user data continues to increase until the amount of user data meets a second amount condition, the controller 11 may continue to convert the data storage mode of the storage space in which data is stored in the SLC mode to the MLC mode, or convert the data storage mode of the storage space in which data is stored in the SLC mode to the TLC mode or the QLC mode. The second amount condition may be that: The amount of user data is greater than or equal to a determined value. Alternatively, the controller 11 may first convert the data storage mode of the storage space in which data is stored in the SLC mode to the MLC mode, and then if a specific value is reached after data is continuously written, convert the data storage mode of the storage space in which data is stored in the MLC mode to the TLC mode. Likewise, if the amount of user data continues to increase, a data storage mode of the storage space in which data is stored in the TLC mode may be converted to the QLC mode.

It should be noted that after the controller 11 converts the data storage mode of the at least a part of storage space in the flash memory array from the first mode to the second mode, if receiving a data write request of the user, the controller 11 writes, in the second mode, target data that needs to be written into the flash memory array.

When modes in all storage space of the two QLC hard disks in the flash memory array are converted to the QLC mode, the storage capacity of the QLC hard disk in the flash memory array may reach a maximum value, and is consistent with an original capacity of the QLC hard disk.

It should be noted that the controller 11 may send a program instruction to the flash memory controller 121 of each hard disk in the flash memory array, to indicate the flash memory controller 121 to convert a data storage mode of storage space in a corresponding hard disk.

In the hard disk control method provided in Embodiment 1, when the amount of user data in the flash memory array is greater than or equal to the first preset value, the controller 11 may convert the data storage mode of the storage space in the flash memory array, to improve data density of the hard disk in the flash memory array, and to increase a capacity of the storage space in the flash memory array, so that the capacity of the flash memory array is not lost.

In Embodiment 1, if the first preset value is relatively low, when the amount of user data in the flash memory array reaches the first preset value, the flash memory array still has a large amount of storage space in which no data is stored. The controller 11 may first convert the data storage mode of the at least a part of storage space in the flash memory array from the first mode to the second mode, then migrate the user data in the flash memory array to the storage space in which data is stored in the second mode, and continuously convert the mode of the storage space occupied before the user data is migrated to the second mode, until the data storage modes in all the storage space in the flash memory array are converted to the second mode. As shown in FIG. 6, Embodiment 2 includes:

601: A controller 11 detects whether an amount of user data stored in a flash memory array is greater than or equal to a first preset value.

For understanding of the step 601, refer to the step 501 in Embodiment 1. Details are not described herein again.

602: When detecting that the amount of user data stored in the storage array is greater than or equal to the first preset value, the controller 11 converts a data storage mode of at least a part of storage space in the flash memory array from a first mode to a second mode.

For understanding of the step 602, refer to the step 502 in Embodiment 1. Details are not described herein again.

603: The controller 11 migrates at least a part of user data to storage space in which data is stored in the second mode.

The controller 11 migrates an amount of the at least a part of user data in the storage space in which data is stored in the first mode to the storage space in which data is stored in the second mode. If the first preset value is relatively low, for example, a storage capacity of the flash memory array is 512 GB, two hard disks storing data in an SLC mode are disposed in the flash memory array, and the first preset value is 100 GB. In the step 602, the controller 11 may convert, to an MLC mode, a data storage mode of the 200 GB storage space in which no data is stored and that is in the flash memory array, to obtain 400 GB storage space in which data is stored in the MLC mode. Then, the controller 11 migrates 100 GB user data in the storage space in which data is stored in the SLC mode and that is in the flash memory array to the storage space in which data is stored in the MLC mode.

Optionally, the controller 11 may also migrate a part of data in the storage space in which data is stored in the SLC mode to the storage space in which data is stored in the MLC mode, and then convert the data storage mode of the storage space in which data is stored in the SLC mode to the MLC mode.

It should be noted that, in the flash memory array, if data in a hard disk is migrated to another hard disk, the controller 11 needs to perform this action. If data in an area of a hard disk in the flash memory array is migrated to another area, this migration process may be performed by the controller 11, or may be performed by the controller 11 by indicating a flash memory controller 121 of the hard disk.

604: The controller 11 releases storage space occupied by the at least a part of user data.

The controller 11 releases the storage space occupied by the at least a part of user data in the flash memory array. The at least a part of user data may be user data migrated to the storage space in which data is stored in the second mode. For example, in the step 603, the 100 GB user data is migrated to the storage space in which data is stored in the MLC mode. This release process may include: deleting the part of user data stored in the storage space, and then erasing an erase block in the part of storage space.

It may be understood that the controller 11 may indicate the flash memory controller 121 of each hard disk in the flash memory array to release storage space of the hard disk.

605: The controller 11 converts the data storage mode of the storage space occupied by the at least a part of user data to the second mode.

The controller 11 converts the data storage mode of the storage space occupied by the at least a part of user data to the second mode. The space occupied by the at least a part of data may be the space released in the step 604. This conversion process is the same as the description in the step 602. The controller 11 may indicate the flash memory controller 121 of each hard disk to convert a data storage mode of storage space in a corresponding hard disk.

According to the hard disk control method provided in Embodiment 2, when the amount of user data in the flash memory array is greater than or equal to the first preset value, a data storage mode of storage space in which no data is stored in the flash memory array may be first converted from the first mode to the second mode, to expand a capacity of the flash memory array. Then, the data in the storage space in which data is stored in the first mode is migrated to the storage space in which data is stored in the second mode, and after the storage space occupied by the migrated data is released, the data storage mode of the released storage space is continuously converted to the second mode. In this way, data storage modes in all storage space in the flash memory array may be gradually converted to the second mode, to expand the capacity of storing data in the flash memory array.

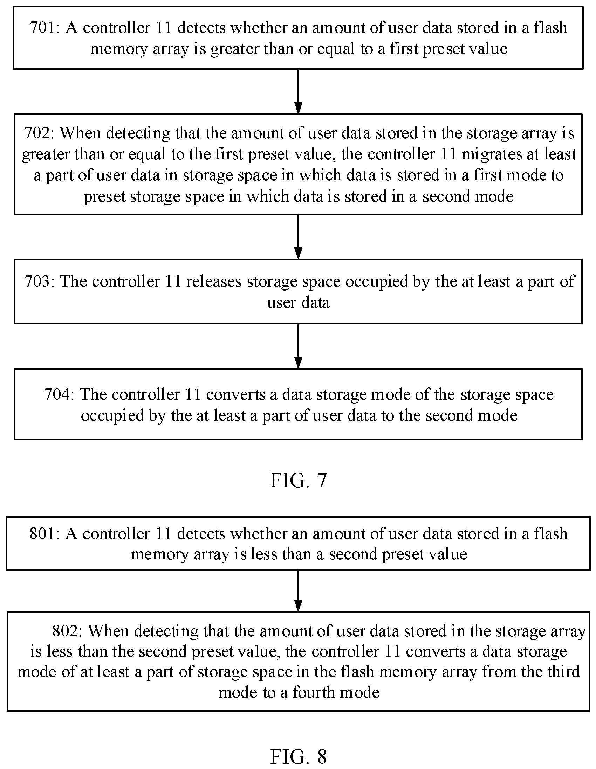

In Embodiment 1, if the first preset value is set to a relatively high value, when the amount of user data in the flash memory array reaches the first preset value, the storage space in which data is stored in the first mode and that is in the flash memory array is almost used up. The controller 11 may first migrate a part of data in the storage space in which data is stored in the first mode to preset storage space in which data is stored in the second mode, then release a part of the storage space in which data is stored in the first mode, and convert the data storage mode of the storage space in which data is stored in the first mode to the second mode. As shown in FIG. 7, Embodiment 3 includes:

701: The controller 11 detects whether an amount of user data stored in a flash memory array is greater than or equal to a first preset value.

For understanding of the step 701, refer to the step 501 in Embodiment 1. Details are not described herein again.

702: When detecting that the amount of user data stored in the storage array is greater than or equal to the first preset value, the controller 11 migrates at least a part of user data in storage space in which data is stored in a first mode to preset storage space in which data is stored in a second mode.

For ease of description, an SLC mode is used as an example of the first mode, and an MLC mode is used as an example of the second mode. When the controller 11 detects that the amount of user data stored in the flash memory array is greater than or equal to the first preset value, the controller 11 writes, in the second mode, at least a part of user data in the storage space in which data is stored in the first mode and that is in the flash memory array into the preset storage space in which data is stored in the second mode. For example, if 256 GB storage space in which data is stored in the SLC mode and 512 GB storage space in which data is stored in the MLC mode are set in the flash memory array, the first preset value may be 200 GB. When the amount of user data in the flash memory array is less than 200 GB, the flash memory array stores written data in the storage space in which data is stored in the SLC mode. When the amount of user data in the storage space in which data is stored in the SLC mode is greater than or equal to 200 GB, the controller 11 migrates at least a part of data in the 200 GB data to the space in which data is stored in the MLC mode.

It should be noted that this data migration process may be performed by the controller 11, or may be performed by the controller 11 by indicating the flash memory controller 121 of a hard disk in the flash memory array. For details, refer to the step 603 in Embodiment 2. Details are not described herein again.

703: The controller 11 releases storage space occupied by the at least a part of user data.

The controller 11 releases the storage space occupied by the at least a part of user data in the flash memory array. The at least a part of user data may be user data migrated to the storage space in which data is stored in the second mode, for example, the data migrated to the storage space in which data is stored in the MLC mode in the step 702. This release process is described in the step 604 in Embodiment 2. Details are not described herein again. The release process may be that: The controller 11 indicates the flash memory controller 121 of each hard disk in the flash memory array to release storage space of a corresponding hard disk.

704: The controller 11 converts a data storage mode of the storage space occupied by the at least a part of user data to the second mode.

The controller 11 converts the data storage mode of the storage space occupied by the at least a part of user data to the second mode. The space occupied by the at least a part of data may be the space released in the step 703. This conversion process is the same as the description in the step 502 in Embodiment 1 and the step 602 in Embodiment 2. The controller 11 may indicate the flash memory controller 121 of each hard disk to convert a data storage mode of storage space in a corresponding hard disk.

The hard disk control method provided in Embodiment 3 may be applied to a case in which the first preset value is relatively high, and the storage space in which data is stored in the first mode and that is in the flash memory array is almost used up. The flash memory array may first migrate data and convert storage space. In this way, data security can be ensured while storage space in the flash memory array is expanded.

In Embodiment 2 and Embodiment 3, the controller 11 migrates the user data to the storage space in which data is stored in the second mode, where the storage space in which data is stored in the second mode is located on the hard disk in the flash memory array. In another implementation, the controller 11 may also migrate the user data to a memory 112 of the controller 11. After releasing a part of storage space in which data is stored in the first mode, the controller 11 converts the data storage mode of the storage space in which data is stored in the first mode to the second mode, and then writes, in the second mode, the user data migrated to the memory 112 into the storage space in which the data is stored in the second mode.

In Embodiment 1 to Embodiment 3, a first amount condition is that: The amount of user data is greater than or equal to the first preset value. When the amount of user data stored in the flash memory array is greater than or equal to the first preset value, the controller 11 may convert the data storage mode of the at least a part of space in the flash memory array from the first mode to the second mode. A hard disk storing data in the second mode has a higher data density than a hard disk storing data in the first mode. In this way, a capacity of the flash memory array is expanded. Embodiment 4 may provide another hard disk control method. In the method, the first amount condition may also be that: The amount of user data is less than a second preset value, and the second preset value may be the same as or different from the first preset value in Embodiment 1 to Embodiment 3.

If the amount of user data in the flash memory array is less than a second preset value, the controller 11 may also convert the data storage mode of the at least a part of space in the flash memory array from a third mode to a fourth mode. For ease of description, an example in which the third mode is a QLC mode is used, and an example in which the fourth mode is a TLC mode is used. A hard disk that stores data in the third mode has higher density than a hard disk that stores data in the fourth mode. This method can increase a program-erase cycle of the hard disk without affecting data storage, and prolong a service life of the hard disk. As shown in FIG. 8, Embodiment 4 includes:

801: The controller 11 detects whether an amount of user data stored in a flash memory array is less than a second preset value.

The controller 11 in the flash memory array detects whether the amount of user data stored in the flash memory array is less than the second preset value. For example, the second preset value may be 50% of a current capacity. In this case, a data storage mode of storage space occupied by the user data in the flash memory array is a third mode. A hard disk that stores data in the third mode has relatively high data density, but a program-erase cycle is relatively small.

For example, two hard disks are disposed in the flash memory array, and data storage modes of the two hard disks each are preset to a QLC mode. The two hard disks each may be the QLC hard disk 401 in FIG. 4, and storage capacities of the two hard disks each are 1024 GB. In this case, a storage capacity of the entire flash memory array is 2048 GB. When the flash memory array deletes, based on a requirement of a user, the data in the flash memory array until the amount of user data stored in the flash memory array is less than 1024 GB. In this case, there is at least 1024 GB storage space in which no data is stored and that is in the flash memory array, a data storage mode of the storage space in which no data is stored is the QLC mode, and a program-erase cycle of space in which data is stored in the QLC mode is relatively small.

In the flash memory array, only storage space in which data is stored in the QLC mode may be preset, or storage space in which data is stored in an SLC mode, an MLC mode, or a TLC mode may be preset.

It should be noted that the controller 11 in the flash memory array may detect an amount of user data in each hard disk by using the flash memory controller 121 of each hard disk in the flash memory array, to obtain the amount of user data in the entire flash memory array, and then to determine whether the amount of user data in the flash memory array is less than the second preset value. The controller 11 may interact with the flash memory controller 121 of each hard disk, to obtain an amount of real-time user data in each hard disk.

802: When detecting that the amount of user data stored in the storage array is less than the second preset value, the controller 11 converts a data storage mode of at least a part of storage space in the flash memory array from the third mode to a fourth mode.

When the controller 11 detects that the amount of user data stored in the flash memory array is less than the second preset value, the controller 11 converts the data storage mode of the at least a part of space in the flash memory array from the third mode to the fourth mode, the hard disk that stores data in the third mode has higher data density than a hard disk that stores data in the fourth mode. In this manner, the program-erase cycle of the at least a part of space after conversion can be increased. It should be noted that, a process in which the data storage mode of the at least a part of storage space in the flash memory array is converted from the third mode to the fourth mode is not perceived by the user.

For example, when the amount of user data stored in the flash memory array in the step 801 is less than 1024 GB, the controller 11 may convert, to the TLC mode, a data storage mode of 500 GB storage space in which data is stored in the QLC mode and that is of the two QLC hard disks, to obtain 375 GB storage space in which data is stored in the TLC mode. A program-erase cycle of the storage space in which data is stored in the TLC mode is relatively large.

Likewise, when the amount of user data stored in the flash memory array continues to decrease until the amount of user data meets a second amount condition, the controller 11 may continue to convert the mode of the storage space in which data is stored in the QLC mode to the TLC mode, or convert the mode of the storage space in which data is stored in the QLC mode to an MLC mode or an SLC mode. The second amount condition may be that: The amount of user data is lower than a determined value. Alternatively, the controller 11 may first convert the data storage mode of the storage space in which data is stored in the QLC mode to the TLC mode, and then convert a data storage mode of the storage space in which data is stored in the TLC mode to the MLC mode if the amount of user data continues to decrease to a specific value. Likewise, if the amount of user data continues to decrease, the data storage mode of the storage space in which data is stored in the MLC mode may be converted to the SLC mode.

It should be noted that after the controller 11 converts the data storage mode of the at least a part of storage space in the flash memory array from the third mode to the fourth mode, if receiving a data write request of the user, the controller 11 writes, in the fourth mode, target data that needs to be written into the flash memory array.

When the modes of all the storage space of the two QLC hard disks in the flash memory array are converted to the SLC mode, the program-erase cycle of the QLC hard disk in the flash memory array may reach a maximum value.

It should be noted that the controller 11 may send a program instruction to the flash memory controller 121 of each hard disk in the flash memory array, to indicate the flash memory controller 121 to convert a data storage mode of storage space in a corresponding hard disk.

It may be understood that, after the controller 11 converts the data storage mode of the at least a part of storage space in the flash memory array from the third mode to the fourth mode, the controller 11 may further migrate the data in the storage space in which data is stored in the third mode to the storage space in which data is stored in the fourth mode, and then continuously convert the data storage mode of the space in which data is stored in the third mode to the fourth mode, until data storage modes of all space in the flash memory array are converted to the fourth mode. This can increase the program-erase cycle of the flash memory array. For details, refer to Embodiment 2. Details are not described herein again.

If the storage space in which data is stored in the fourth mode is preset in the flash memory array, the controller 11 may first migrate the data in the storage space in which data is stored in the third mode to the storage space in which data is stored in the fourth mode, and then convert the data storage mode of the storage space in which data is stored in the third mode to the fourth mode. For details, refer to Embodiment 3 for understanding. Details are not described herein again.

In the hard disk control method provided in Embodiment 4, when the amount of user data in the flash memory array is less than the second preset value, the controller 11 may convert the data storage mode of the storage space in the flash memory array, reduce the data density of the hard disk in the flash memory array, and increase the program-erase cycle of the flash memory array. This can prolong a service life of the flash memory array.

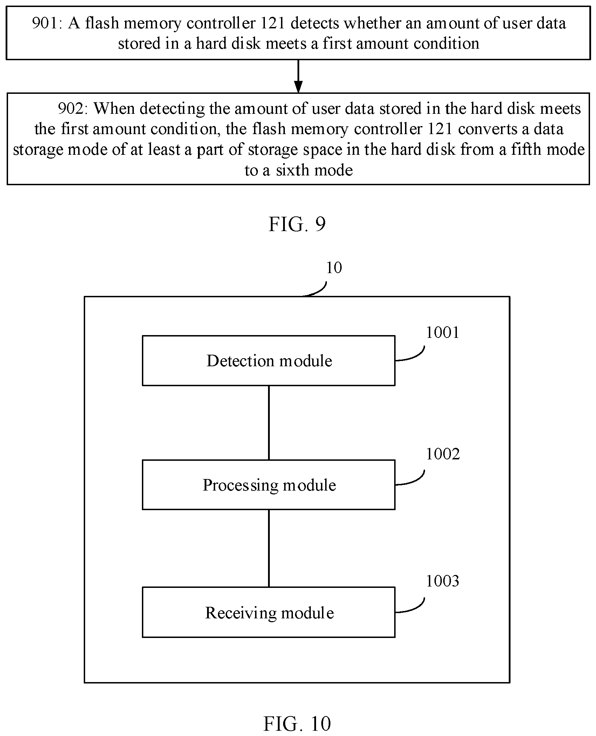

The hard disk control methods provided in Embodiment 1 to Embodiment 4 are all for the flash memory array shown in FIG. 1, and the method may also be applied to the hard disk shown in FIG. 3. Embodiment 5 provides a hard disk control method. As shown in FIG. 9, the method may include the following steps.

901: The flash memory controller 121 detects whether an amount of user data stored in a hard disk meets a first amount condition.

The flash memory controller 121 detects whether the amount of user data stored in the hard disk meets the first amount condition. The first amount condition may be that: The amount of user data in Embodiment 1 to Embodiment 3 is greater than or equal to a first preset value. When the amount of user data stored in the flash memory array is greater than or equal to the first preset value, if the hard disk continues to write data, a remaining capacity of the hard disk is about to be used up. For details, refer to the step 501 in Embodiment 1 for understanding. Details are not described herein again.

The first amount condition may also be that: The amount of user data in Embodiment 4 is less than a second preset value, and the second preset value may be equal to or not equal to the first preset value. When the amount of user data stored in the hard disk is less than the second preset value, the flash memory controller 121 in the hard disk may reduce data density of the hard disk, to increase a program-erase cycle. For details, refer to the step 801 in Embodiment 4 for understanding. Details are not described herein again.

902: When detecting the amount of user data stored in the hard disk meets the first amount condition, the flash memory controller 121 converts a data storage mode of at least a part of storage space in the hard disk from a fifth mode to a sixth mode.

For ease of description, an MLC mode may be used as an example of the fifth mode. In the step 901, if the flash memory controller 121 detects that the amount of user data in the hard disk is greater than or equal to the first preset value, the flash memory controller 121 may convert the data storage mode of the at least a part of storage space in the hard disk from the fifth mode to the sixth mode, where a TLC mode may be used as an example of the sixth mode. After the flash memory controller 121 converts the data storage mode of the at least a part of storage space in the hard disk from the fifth mode to the sixth mode, the capacity of the hard disk may be expanded, and more data may be stored. For details, refer to the step 502 in Embodiment 1 for understanding. Details are not described herein again.

In the step 902, if the flash memory controller 121 detects that the amount of user data in the hard disk is less than the first preset value, the flash memory controller 121 may convert the data storage mode of the at least a part of storage space in the hard disk from the fifth mode to the sixth mode, where an SLC mode may be used as an example of the sixth mode. After the flash memory controller 121 converts the data storage mode of the at least a part of storage space in the hard disk from the fifth mode to the sixth mode, the program-erase cycle is increased. For details, refer to the step 802 in Embodiment 4 for understanding. Details are not described herein again.

It may be understood that, after the flash memory controller 121 converts the data storage mode of the at least a part of storage space in the hard disk from the fifth mode to the sixth mode, the flash memory controller 121 may further migrate the data in the storage space in which data is stored in the fifth mode to storage space in which data is stored in the sixth mode, release the storage space occupied by the data, and then continuously convert the data storage mode of the storage space in which data is stored in the fifth mode to the sixth mode, until data storage modes of all storage space in the hard disk are converted to the sixth mode. For details, refer to Embodiment 2. Details are not described herein again.

If the storage space in which data is stored in the sixth mode is preset in the hard disk, the flash memory controller 121 may first migrate the data in the storage space in which data is stored in the fifth mode to the storage space in which data is stored in the sixth mode, and then convert the data storage mode of the storage space in which data is stored in the fifth mode to the sixth mode. For details, refer to Embodiment 3 for understanding. Details are not described herein again.

It may be understood that after the flash memory controller 121 converts the data storage mode of the at least a part of storage space in the hard disk from the fifth mode to the sixth mode, if the flash memory controller receives a data write request, the flash memory controller writes target data into the hard disk in the sixth mode.

Embodiment 6 provides a hard disk control apparatus. The hard disk control apparatus may be applied to the hard disk control method in Embodiment 9. As shown in FIG. 10, the hard disk control apparatus includes a detection module 1001, a processing module 1002 and a receiving module 1003.

The detection module 1001 is configured to detect whether an amount of user data stored in a hard disk meets a first amount condition. For understanding, refer to the step 901 in Embodiment 5. Details are not described herein again.

The processing module 1002 is configured to: when the amount of stored user data meets the first amount condition, convert a data storage mode of at least a part of storage space in the hard disk from a fifth mode to a sixth mode. For details, refer to the step 902 in Embodiment 5. Details are not described herein again.

The processing module 1002 is further configured to migrate data in storage space in which data is stored in the fifth mode to storage space in which data is stored in the sixth mode. For details, refer to the step 902 in Embodiment 5. Details are not described herein again.

The processing module 1002 is further configured to release storage space occupied by at least a part of user data. For details, refer to the step 902 in Embodiment 5. Details are not described herein again.

The receiving module 1003 is configured to receive a data write request, where the data write request includes target data. For details, refer to the step 902 in Embodiment 5. Details are not described herein again. The hard disk control apparatus may be located in the hard disk, and the flash memory controller 121 performs a specific function of the hard disk control apparatus. In another implementation, the hard disk control apparatus may be located in a controller in a flash memory array, and each module is executed by a processor in the controller by invoking program code in a memory.

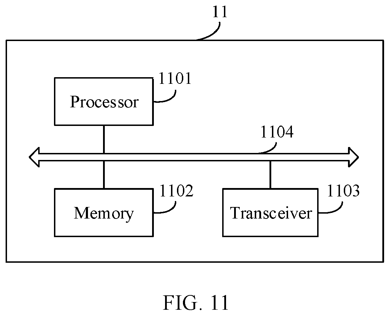

Embodiment 7 provides the controller 11. The controller 11 is applied to the flash memory array in Embodiment 1 to Embodiment 4. Referring to FIG. 11, Embodiment 7 of the present invention provides the controller 11. The controller 11 may include:
a processor 1101, a memory 1102, and a transceiver 1103. The controller 11 is a device of a hardware structure, and may be configured to perform steps performed by the controller in the flash memory array in Embodiment 1 to Embodiment 4. For example, a person skilled in the art may figure out the step 501 in Embodiment 1. The controller 11 may send signaling by using the transceiver 1103 to query an amount of user data in each hard disk in the flash memory array, and then receive the amount of user data in each hard disk by using the transceiver 1103. The processor 1101 invokes a program in the memory 1102 to add up amounts of user data in all hard disks to obtain an amount of user data in the flash memory array, and compares the amount of user data with a first preset value, to determine whether the amount of user data in the flash memory array is greater than or equal to the first preset value. In addition, the processor 1101 may further send, by using the transceiver 1103, a command to each hard disk in the flash memory array, to indicate the flash memory controller in the hard disk to convert a data storage mode of storage space in a corresponding area in the hard disk from a first mode to a second mode. For details, refer to the step 502 in Embodiment 1.

Optionally, the processor 1101 may be one or more central processing units (central processing unit, CPU), a microprocessor, an application-specific integrated circuit (application-specific integrated circuit, ASIC), or one or more integrated circuits configured to control program execution in the solutions of the present invention.

The processor 1101, the memory 1102, and the transceiver 1103 are connected by using a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

The hard disk control method and the related device provided in the embodiments of this application are described in detail above. The principle and implementation of the present invention are described herein through specific examples. The description about the embodiments of this application is merely provided to help understand the method and core ideas of this application. In addition, persons of ordinary skill in the art can make variations and modifications to this application in terms of the specific implementations and application scopes according to the ideas of this application. Therefore, the content of specification shall not be construed as a limit to this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A hard disk control method, wherein the method is applied to a storage device and comprises:
detecting whether an amount of user data stored in the storage device meets a first amount condition, wherein the storage device comprises a first storage area, the first storage area stores data in a first mode, and the first mode is one of a single-level cell SLC mode, a multi-level cell MLC mode, a triple-level cell TLC mode, and a quad-level cell QLC mode; and
when the amount of stored user data meets the first amount condition, converting a data storage mode of a first sub-area in the first storage area from the first mode to a second mode, wherein the second mode is one of the SLC mode, the MLC mode, the TLC mode, and the QLC mode, and the second mode is different from the first mode.

2. The method according to claim 1, wherein after the converting a data storage mode of a first sub-area in the first storage area from the first mode to a second mode, the method further comprises:
migrating at least a part of user data in the user data in the first storage area to the converted first sub-area;
releasing an area occupied by the at least a part of user data in the first storage area; and
converting a data storage mode of the area occupied by the at least a part of user data to the second mode.

3. The method according to claim 1, wherein before the converting a data storage mode of a first sub-area in the first storage area from the first mode to a second mode, the method further comprises:
migrating at least a part of user data in the user data in the first storage area to a cache of the storage device;
releasing an area occupied by the at least a part of user data; and
after converting the data storage mode of the first sub-area in the first storage area from the first mode to the second mode, writing the at least a part of user data into the converted first storage area in the second mode.

4. The method according to claim 1, wherein the storage device further comprises a second storage area, the second storage area stores data in the second mode, and before the converting a data storage mode of a first sub-area in the first storage area from the first mode to a second mode, the method further comprises:
migrating at least a part of user data in the user data in the first storage area to the second storage area of the storage device; and
releasing an area occupied by the at least a part of user data.

5. The method according to any one of claims 1 to 4, wherein the method further comprises:
receiving a data write request, wherein the data write request comprises target data; and
writing the target data into the converted first sub-area in the second mode in the second mode.

6. The method according to claim 5, wherein the method further comprises:
detecting whether the amount of user data stored in the storage device meets a second amount condition, wherein the storage device comprises the second storage area; and
when the amount of stored user data meets the second amount condition, converting a data storage mode of a second sub-area in the second storage area from the second mode to a third mode, wherein the third mode is one of the SLC mode, the MLC mode, the TLC mode, and the QLC mode, and the third mode is different from the second mode.

7. A hard disk control apparatus, wherein the hard disk control apparatus is applied to a hard disk, and the hard disk control apparatus comprises:
a detection module, configured to detect whether an amount of user data stored in the storage device meets a first amount condition, wherein the storage device comprises a first storage area, the first storage area stores data in a first mode, and the first mode is one of a single-level cell SLC mode, a multi-level cell MLC mode, a triple-level cell TLC mode, and a quad-level cell QLC mode; and
a processing module, configured to: when the amount of stored user data that is detected by the detection module meets the first amount condition, convert a data storage mode of a first sub-area in the first storage area from the first mode to a second mode, wherein the second mode is one of the SLC mode, the MLC mode, the TLC mode, and the QLC mode, and the second mode is different from the first mode.

8. The hard disk control apparatus according to claim 7, wherein the hard disk control apparatus further comprises:
the processing module is configured to migrate at least a part of user data in the user data in the first storage area to the converted first sub-area;
the processing module is further configured to release an area occupied by the at least a part of user data in the first storage area; and
the processing module is further configured to convert a data storage mode of the area occupied by the at least a part of user data to the second mode.

9. The hard disk control apparatus according to claim 7, wherein the hard disk control apparatus further comprises:
the processing module is further configured to migrate at least a part of user data in the user data in the first storage area to a second storage area of the hard disk, wherein the second storage area stores data in the second mode; and
the processing module is further configured to release an area occupied by the at least a part of user data.

10. The hard disk control apparatus according to any one of claims 7 to 9, wherein the hard disk control apparatus further comprises:
a receiving module, configured to receive a data write request, wherein the data write request comprises target data; and
the processing module is further configured to write the target data into the converted first sub-area in the second mode.

11. The hard disk control apparatus according to claim 10, wherein the hard disk control apparatus further comprises:
the detection module is further configured to detect whether the amount of user data stored in the storage device meets a second amount condition, wherein the storage device comprises the second storage area; and
the processing module is further configured to: when the amount of stored user data that is detected by the detection module meets the second amount condition, convert a data storage mode of a second sub-area in the second storage area from the second mode to a third mode, wherein the third mode is one of the SLC mode, the MLC mode, the TLC mode, and the QLC mode, and the third mode is different from the second mode.

12. A controller, wherein the controller is located in a storage device, the storage device comprises at least one hard disk and the controller, the controller comprises a processor and a memory, the memory stores a program instruction, and the processor is configured to invoke the program instruction in the memory to perform the following steps:
detecting whether an amount of user data stored in the storage device meets a first amount condition, wherein the storage device comprises a first storage area, the first storage area stores data in a first mode, and the first mode is one of a single-level cell SLC mode, a multi-level cell MLC mode, a triple-level cell TLC mode, and a quad-level cell QLC mode; and
when the amount of user data stored in the storage device meets the first amount condition, converting a data storage mode of a first sub-area in the first storage area from the first mode to a second mode, wherein the second mode is one of the SLC mode, the MLC mode, the TLC mode, and the QLC mode, and the second mode is different from the first mode.

13. The controller according to claim 12, wherein the processor is further configured to invoke the program instruction in the memory to perform the following steps:
migrating at least a part of user data in the user data in the first storage area to the converted first sub-area;
releasing an area occupied by the at least a part of user data in the first storage area; and
converting a data storage mode of the area occupied by the at least a part of user data to the second mode.

14. The controller according to claim 12, wherein the processor is further configured to invoke the program instruction in the memory to perform the following steps:
migrating at least a part of user data in the user data in the first storage area to a cache of the storage device;
releasing an area occupied by the at least a part of user data; and
after converting the data storage mode of the first sub-area in the first storage area from the first mode to the second mode, writing the at least a part of user data to the converted first storage area in the second mode.

15. The controller according to claim 12, wherein the processor is further configured to invoke the program instruction in the memory to perform the following steps:
migrating at least a part of user data in the user data in the first storage area to a second storage area of the storage device, wherein the second storage area stores data in the second mode; and
releasing an area occupied by the at least a part of data.

16. The controller according to any one of claims 12 to 15, wherein the processor is further configured to invoke the program instruction in the memory to perform the following steps:
receiving a data write request, wherein the data write request comprises target data; and
writing the target data into the second storage area or the converted first storage area in the second mode.

17. The controller according to claim 16, wherein the processor is further configured to invoke the program instruction in the memory to perform the following steps:
detecting whether the amount of user data stored in the storage device meets a second amount condition, wherein the storage device comprises the second storage area; and
when the amount of stored user data stored in the storage device meets the second amount condition, converting a data storage mode of a second sub-area in the second storage area from the second mode to a third mode, wherein the third mode is one of the SLC mode, the MLC mode, the TLC mode, and the QLC mode, and the third mode is different from the second mode.
